# EUROPÄISCHE PATENTANMELDUNG

(11) **EP 3 369 476 A1**
(43) Veröffentlichungstag der Anmeldung: **05.09.2018**
(21) Anmeldenummer: 18157296.7
(22) Anmeldetag: 19.02.2018
(51) Int. Cl.: B01F 5/02, B01F 13/10, B01F 15/00, B01F 1/00

(54) **VORRICHTUNG UND VERFAHREN ZUR BEREITSTELLUNG VON REINIGUNGSFLUID**

(30) Priorität: 03.03.2017 DE 102017104492
(71) Anmelder: Wiesheu GmbH, 71723 Großbottwar (DE)
(72) Erfinder: Dröge, Falko, 71570 Oppenweiler (DE); Osswald, Joachim, 71384 Weinstadt (DE); Braun, Florian, 71737 Kirchberg an der Murr (DE)
(74) Vertreter: Witte, Weller & Partner Patentanwälte mbB

(57) **Zusammenfassung**

Eine Vorrichtung (100) zur Bereitstellung zumindest eines Reinigungsfluids (10), mit einem Sammelbehälter (16), der über eine Pumpe (24) und eine Fluidleitung (22) mit einem ersten Reinigerbehälter (14) verbunden ist, in dem eine erste Reinigerkomponente (12) aufgenommen ist, mit einer Sensoreinheit (32, 34, 35, 40, 41), und mit einer Steuereinheit (42) zur Steuerung der Pumpe (24) und zur Unterbrechung eines Fluidkreislaufs in Abhängigkeit von der Sensoreinheit (32, 34, 35, 40, 41) gemessenen Konzentration.

## Beschreibung

Die Erfindung betrifft eine Vorrichtung und ein Verfahren zur Bereitstellung zumindest eines Reinigungsfluids, mit einem Sammelbehälter, der über eine Pumpe und eine Fluidleitung mit einem ersten Reinigerbehälter verbunden ist, in dem eine erste Reinigerkomponente aufgenommen ist, mit einer Sensoreinheit, und mit einer Steuereinheit zur Steuerung der Pumpe und/oder der Zufuhr von Reinigerkomponente in den Sammelbehälter in Abhängigkeit einer von der Sensoreinheit gemessenen Konzentration.

Derartige Vorrichtungen und Verfahren zur Herstellung von Reinigungsfluiden aus festen Reinigerkomponenten sind im Stand der Technik hinreichend bekannt, beispielsweise aus der WO 2011/157298 A1.

Aus der WO 2011/157298 A1 sind eine Dosiervorrichtung sowie ein Verfahren zur Bereitstellung eines Reinigungsfluids bekannt. Die Dosiervorrichtung erzeugt das Reinigungsfluid durch Lösen einer festen Reinigerkomponente. Die Dosiervorrichtung ist dabei derart ausgestaltet, dass eine Messeinheit die Leitfähigkeit des Reinigungsfluids misst und hierdurch die Konzentration des Reinigungsfluids bestimmt.

Bei dem Reinigungsfluid handelt es sich um ein aggressives Lösungsmittel mit einem pH-Wert zwischen 13 und 14. Bei der Messung der Leitfähigkeit in einer derartigen Lösung kommt es unweigerlich zu Messungenauigkeiten. Aufgrund des aggressiven Reinigungsfluid kann die Oberfläche der Leitwertelektroden angegriffen und zerstört werden, da sich diese im Reinigungsfluid befinden. Geeignete Elektroden, die chemisch inert sind, so dass sie auch in stark basischem Milieu zuverlässige Ergebnisse liefern, bestehen beispielsweise aus Platin und sind sehr teuer in der Anschaffung. Ferner kommen ständige Wartungskosten hinzu. Darüberhinaus verhält sich der Leitwert einer NaOH-Lösung mit zunehmender Konzentration asymptotisch, so dass auch hierdurch die Genauigkeit der Messung leidet. Ferner wird bei diesem Gerät das Reinigungsfluid unmittelbar vor der Anwendung vollautomatisch frisch erzeugt, was eine Kommunikation mit den angeschlossenen Geräten voraussetzt und somit die Flexibilität bei der Auswahl der mit Reinigerlösung zu versorgenden Geräte einschränkt.

Ferner sind aus der DE 10 2014 202 430 A1 ein weiteres Dosiergerät und ein weiteres Verfahren zur Bereitstellung eines Reinigungsfluids bekannt. Diese Dosiervorrichtung erzeugt das Reinigungsfluid auch durch Lösen einer festen Reinigerkomponente. Diese Dosiervorrichtung weist keine Mittel zur Konzentrationsmessung auf. Alternativ wird hier eine vorbestimmte Konzentration des Reinigungsfluids durch die zeitliche Regulierung des Lösevorgangs der festen Reinigerkomponente erhalten.

Ein Nachteil dieses Geräts besteht darin, dass zur Erzeugung eines Reinigungsfluids mit einer definierten Konzentration der feste Reiniger zeitlich gesteuert angesprüht wird. Aufgrund der Abhängigkeit der Lösungsgeschwindigkeit der festen Reinigerkomponente von der Umgebungstemperaturen und der Feuchtigkeit, führt ein rein zeitlich gesteuerter Lösungsvorgang nicht zur erforderlichen Genauigkeit der Konzentration des Reinigungsfluids. Es kann somit nicht sichergestellt werden, ob die Konzentration des Reinigungsfluids einer Sollkonzentration entspricht.

Vor diesem Hintergrund liegt der Erfindung die Aufgabe zugrunde, eine Vorrichtung und ein Verfahren zu offenbaren, womit eine Bereitstellung eines Reinigungsfluids mit einer vorbestimmten Konzentration auf möglichst einfache und zuverlässige Weise ermöglicht wird.

Diese Aufgabe wird erfindungsgemäß durch eine Vorrichtung zur Bereitstellung zumindest eines Reinigungsfluids mit einem Sammelbehälter gelöst, der über eine Pumpe und eine Fluidleitung mit einem ersten Reinigerbehälter verbunden ist, in dem eine erste Reinigerkomponente aufgenommen ist, mit einer Sensoreinheit, und mit einer Steuereinheit zur Steuerung der Pumpe und/oder der Zufuhr von Reinigerkomponente in den Sammelbehäler in Abhängigkeit einer von der Sensoreinheit gemessenen Konzentration des Reinigungsfluids, wobei die Sensoreinheit zur kontaktlosen Konzentrationsmessung ausgebildet ist.

Die Aufgabe der Erfindung wird auf diese Weise vollkommen gelöst.

Durch die erfindungsgemäß vorgeschlagene Lösung kann in vorteilhafter Weise die Konzentration des Reinigungsfluids sicher bestimmt werden, ohne dass die Sensoreinheit in Kontakt mit dem aggressiven Reinigungsfluid kommt. Auf diese Weise wird erreicht, dass die Oberfläche der Sensoreinheit nicht durch das aggressive Reinigungsfluid korrodiert und/oder beschädigt wird. Gemäß der Erfindung handelt es sich bei einer "kontaktlosen Konzentrationsmessung" um eine Messung, bei der die Sensoreinheit die Konzentration über eine Wandung oder ein anderes Trennmittel, wie eine Membran, hindurch misst.

In einer bevorzugten Ausgestaltung ist die Sensoreinheit an der äußeren Wandung des Sammelbehälters angebracht.

In einer weiteren bevorzugten Ausgestaltung kann die Sensoreinheit auch an der äußeren Wandung der Fluidleitung angebracht sein.

Die Konzentrationsmessung kann sowohl am Reinigungsfluid im Sammelbehälter als auch am Reinigungsfluid in der Fluidleitung durchgeführt werden, da diese ja im Rahmen der Messgenauigkeit identisch ist.

Mittels der Sensoreinheit werden kontaktlose Messungen unterschiedlicher Parameter eines Lösungsmittels im Sammelbehälter oder in der Fluidleitung durchgeführt. Aus diesen Parametern lässt sich anschließend die Konzentration an gelöster Reinigerkomponente in einem Fluid ermitteln. Die Parameter zeichnen sich dadurch aus, dass diese abhängig sind von der Konzentration an gelöster Reinigerkomponente. Mittels dieser Messmethode kann die Konzentration zuverlässig bestimmt werden. Bei den Parametern kann es sich um absolute Werte handeln oder um Veränderungen der Parameter, also um eine Differenz, ohne dass ein absoluter Wert gemessen werden muss.

Bevorzugt ist die Sensoreinheit derart ausgestaltet, dass diese eine Veränderung des hydrostatischen Drucks des Reinigungsfluids, eine Veränderung des Gewichts des Sammelbehälters, eine Veränderung der Kapazität, eine Veränderung des Brechungsindex oder eine Veränderung der Schallgeschwindigkeit ermitteln kann. Diese Parameter verändern sich in Abhängigkeit der Konzentration an gelöster Reingerkomponente im Fluid.

Die Herstellung des Reinigungsfluids mit einer vordefinierten Konzentration wird durch Lösen einer Reinigerkomponente in einem Fluid erreicht.

In einer vorteilhaften Weise ist die erfindungsgemäße Vorrichtung so beschaffen, dass der Reinigerbehälter kopfüber am Sammelbehälter der Vorrichtung befestigt ist. Wird der Reinigerbehälter kopfüber in der erfindungsgemäßen Vorrichtung angeordnet, indem dieser etwa in den Sammelbehälter eingeschraubt wird, so kann ein Fluid die Unterseite der Reinigerkomponente benetzen und anlösen. Das Fluid wird in einem Kreislauf gefördert und durch die gelöste Reinigerkomponente angereichert, bis ein Reinigungsfluid erhalten wird, welches eine definierte Konzentration an gelöster Reinigerkomponente aufweist. Das Lösen der Reinigerkomponente und/oder der damit verbundene Fluidkreislauf kann unterbrochen werden, sobald die Sensoreinheit das Erreichen der vorgegebenen Sollkonzentration registriert. Die Unterbrechung des Fluidkreislaufs und/oder der Zufuhr von neuer Reinigungskomponente wird durch die Steuereinheit geregelt. Diese reguliert vorzugsweise sowohl die Pumpe als auch die Zufuhr von Reinigerkomponente. Die Zufuhr von Reinigerkomponente kann beispielsweise unterbrochen werden, indem die Reinigerkomponente nicht mehr durch das Reinigungsfluid angesprüht wird. Es kann also einerseits die Pumpe abgeschaltet werden. Andererseits kann zusätzlich oder alternativ die Zufuhr von Reinigerkomponente unterbrochen werden.

Sofern die Zufuhr an gelöster Reinigerkomponente unterbrochen wird, kann die Pumpe weiterlaufen und weiterhin das Reinigungsfluid in einem Kreislauf umwälzen. In dieser Ausführungsform wird jedoch verhindert, dass das Reinigungsfluid weitere Reinigerkomponente löst. Diese Ausführungsform bietet den Vorteil, dass durch das Umwälzen des Reinigungsfluids stets eine Durchmischung stattfindet, was zu einer homogenen Konzentration führt. Ferner wird hierdurch vermieden, dass gelöste Reinigerkomponente aus dem Reinigungsfluid ausfällen kann.

Sofern in dieser Erfindungsmeldung die Rede von "Konzentration" ist, so ist stets die Konzentration der gelösten Reinigerkomponente im Fluid gemeint. Durch Anreicherung der gelösten Reinigerkomponente im Fluid ändert sich folglich die Konzentration.

Erfindungsgemäß handelt es sich bei einem "Fluid" um eine wässrige Lösung, welche keine gelöste Reinigerkomponente enthält. Bevorzugt handelt es sich bei dem Fluid um Wasser, besonders bevorzugt mit einer bekannten Dichte. Durch Anreicherung von gelöster Reinigerkomponente im Fluid wird das Fluid zum Reinigungsfluid. Bevorzugt ist das Reinigungsfluid im Sammelbehälter bevorratet.

Bei der "Reinigerkomponente" handelt es sich bevorzugt um ein Blockgebinde, welches in fester Form vorliegt. Insbesondere handelt es sich bei der Reinigerkomponente um ein basisches Reinigungssalz, welches schnell in Lösung gehen kann.

Vorteilhafterweise kann das Reinigungsfluid auch über einen längeren Zeitraum gelagert werden und die Konzentration kann dabei regelmäßig bestimmt werden. Dies wird durch die kontaktlose Ausgestaltung der Sensoreinheit ermöglicht. Während der Lagerung kann die Konzentration kontinuierlich überprüft und gegebenenfalls nachjustiert werden. Das korrigieren der Konzentration kann zum einen durch weitere Hinzugabe von Fluid erreicht werden, sofern die Konzentration des Reinigungsfluid über der definierten Konzentration liegt. Ein Grund für das Überschreiten der Konzentration könnte an der Verdunstung des Fluids oder der Ausfällung der Reinigerkomponente liegen. Zum anderen kann, sofern die Konzentration des Reinigungsfluid unter der definierten Konzentration liegt, weitere Reinigerkomponente durch das Lösungsmittel gelöst werden. Dies wird durch Steuerung der Pumpe mittels der Steuereinheit erreicht, so dass das Fluid im Fluidkreislauf umläuft. Hierdurch kann gewährleistet werden, dass stets die vordefinierte Konzentration im Reinigungsfluid vorliegt.

Die Vorrichtung ist gemäß einer weiteren Ausführung der Erfindung derart ausgestaltet, dass der Sammelbehälter lediglich das Volumen für eine einmalige Reinigung eines Geräts umfasst. Hierfür kann das Reinigungsfluid über einen Auslass entnommen werden oder die Vorrichtung kann direkt an ein zu reinigendes Gerät angeschlossen sein. Dafür kann das Reinigungsfluid frisch hergestellt werden oder im Sammelbehälter bis zum eigentlichen Reinigungsbedarf gelagert werden.

Gemäß einer weiteren Ausführung der Erfindung umfasst der Sammelbehälter ein größeres Volumen, so dass genügend Reinigungsfluid bereitgestellt werden kann, um mehrere Reinigungsvorgänge durchzuführen bzw. mehrere Geräte auf einmal oder hintereinander zu reinigen. Hierfür kann das Reinigungsfluid in dem Sammelbehälter gelagert und bei Bedarf entnommen werden. In dieser Ausgestaltung kann, gesteuert durch die Sensoreinheit, die definierte Konzentration stets eingestellt bzw. gegebenenfalls nachjustiert werden. Bevorzugt wird das Reinigungsfluid zur vollautomatischen Reinigung von Geräten eingesetzt, welche zur Wärmebehandlung von Lebensmitteln ausgestaltet sind, beispielsweise von Backöfen, Kombidämpfern, Spülmaschinen oder Kaffeevollautomaten .

In einer Weiterbildung der Erfindung weist die Sensoreinheit Mittel zur Messung des hydrostatischen Drucks auf.

In einer bevorzugten Ausgestaltung wird die Konzentration durch Messung der hydrostatischen Druckveränderung innerhalb des Sammelbehälters ermittelt. Der hydrostatische Druck verändert sich durch das Lösen der Reinigerkomponente, sodass mittels der gemessen Druckänderung auf die Konzentration des Reinigungsfluids geschlossen werden kann.

Da der hydrostatische Druck unter anderem abhängig von der Höhe des Flüssigkeitsspiegels und der Dichte der zu messenden Lösung ist, kann, sofern einer der beiden Parameter bekannt ist, der jeweils andere Parameter bestimmt werden.

Zur Messung kann am unteren Ende des Sammelbehälters eine mit Luft gefüllte Messleitung angeschlossen sein, die bis über das maximale Niveau des Flüssigkeitsniveaus führt und an der ein Drucksensor angeschlossen ist. Dabei kann es sich in der einfachsten Ausführung um ein Manometer handeln.

Alternativ kann das Gewicht des Sammelbehälters gemessen werden, das von der Füllhöhe und der Dichte des Reinigungsfluids abhängig ist (gravimetrische Messung).

Der Sammelbehälter ist hierbei derart vertikal beweglich aufgehängt, dass eine Gewichtsveränderung innerhalb des Sammelbehälters von der Sensoreinheit in Form eines Drucksensors registriert werden kann.

Beispielsweise können über die Messung der Veränderung des hydrostatischen Drucks zunächst die Füllhöhe und damit das Volumen des Fluids innerhalb des Sammelbehälters bestimmt werden. Bei dem Fluid handelt es sich bevorzugt um eine Flüssigkeit mit bekannter Dichte. Nachdem die Füllhöhe und somit auch das Volumen im Sammelbehälter bestimmt wurde, kann das Fluid in dem Kreislauf gefördert werden, so dass Reinigerkomponente gelöst wird und im Fluid angereichert wird. Durch die Anreicherung der gelösten Reinigerkomponente verändert sich die Dichte im Fluid und somit auch der hydrostatische Druck innerhalb des Sammelbehälters bzw. das Gewicht des Sammelbehälters. Das Volumen bleibt während des Lösungsvorgangs annähernd gleich, so dass durch die Veränderung des hydrostatischen Drucks die Dichte und damit die Konzentration des Reinigungsfluids bestimmt werden können.

Der Drucksensor zur Gewichtsmessung des Sammelbehälters oder zur Messung des hydrostatischen Drucks ist beispielsweise als Piezo-Sensor ausgebildet, dessen Ausgangssignal der Steuereinheit zugeführt ist. Sobald der Druck einen vorbestimmten Schwellwert erreicht, schaltet bevorzugt die Pumpe ab und gleichzeitig wird die weitere Zufuhr von Reinigerkomponente aus dem Reinigerbehälter gestoppt.

Mittels dieser kontaktlosen Konzentrationsmessungen, bei der Mittel zur Messung des hydrostatischen Drucks eingesetzt werden, ist es möglich, zuverlässig die Konzentration an gelöster Reinigungskomponente im Fluid zu bestimmen, ohne dabei eine Messsonde dem aggressiven Reinigungsfluid auszusetzen.

In einer Weiterbildung der Erfindung weist die Sensoreinheit Mittel zur Messung der Kapazität auf.

Hierbei wird insbesondere die Veränderung der Permittivität des zu messenden Reinigungsfluids ausgenutzt. Für diese Ausgestaltung ist die Wandung des Sammelbehälters oder der Fluidleitung bevorzugt nichtleitend ausgestaltet, da die Messsonden an der äußeren Wandung des Sammelbehälters oder der Fluidleitung angebracht werden. In einer bevorzugten Ausgestaltung ist die Wandung durch ein "Fenster" gekennzeichnet, welches einen Bereich definiert, in dem die Wandung nichtleitend ausgestaltet ist.

Bei der kapazitiven Messung werden mindestens zwei Elektroden verwendet, zwischen denen sich das Messfeld befindet, das durch die Konzentration von darin befindlichem Reinigerfluid beeinflusst wird. Die beiden Elektroden bilden die Platten eines elektrischen Kondensators. Die beiden Platten sind bevorzugt starr. Die Kapazität ändert sich aufgrund der veränderten Konzentration und der damit verbundeneren Veränderung der Permittivität.

In einer bevorzugten Ausgestaltung weist der kapazitive Sensor eine Schirmelektrode auf. Hierdurch können auch kleine Konzentrationsveränderungen detektiert werden. Die Schirmelektrode umgibt bevorzugt die eigentliche Messelektrode, sodass der inhomogene Randbereich des elektrischen Felds von der Messelektrode abgeschirmt wird. Hierdurch kann ein annähernd paralleles elektrisches Feld mit der bekannten Charakteristik eines idealen Plattenkondensators zwischen der Messelektrode und der zu messenden Oberfläche erzeugt werden.

Der kapazitive Sensor arbeitet bevorzugt mit einer RC-Oszillatorschaltung, die eine elektrische Wechselspannung erzeugt. Der Schwingkreis wird über die Messzelle geschlossen, in der das Reinigungsfluid aufgenommen ist. Durch die Änderung der Konzentration des Reinigungsfluids verändert sich die Kapazität und beeinflusst so die Schwingungsfrequenz.

In einer ersten Ausgestaltung kann hierdurch die Füllhöhe des Fluids im Sammelbehälter bestimmt werden, aufgrund der unterschiedlichen Permittivitätn von Luft und dem Fluid bzw. Reinigungsfluid. Für diese Ausgestaltung befindet sich die Messsonde bevorzugt an der Wandung des oberen Drittels des Sammelbehälters.

Gemäß einer zweiten Ausgestaltung wird die Fluidleitung als Messzelle verwendet, wobei die Elektroden an den beiden gegenüberliegenden Wandungen angeordnet sind. Hierdurch hat die durch die Veränderung der Konzentration des umlaufenden Reinigungsfluids veränderte Kapazität unmittelbaren Einfluss auf den über die Messzelle geschlossenen Schwingkreis und verändert somit dessen Frequenz.

Mittels dieser kontaktlosen Konzentrationsmessungen, bei der Mittel zur Messung des Kapazität eingesetzt werden, ist es möglich, zuverlässig die Konzentration an gelöster Reinigungskomponente im Fluid zu bestimmen, ohne dabei die Sensoreinheit dem aggressiven Reinigungsfluid auszusetzen.

In einer weiteren Ausgestaltung der Erfindung weist die Sensoreinheit Mittel zur Messung des Brechungsindex auf.

In dieser Ausgestaltung wird die Konzentration mittels Messungen des Brechungsindex des Reinigungsfluids ermittelt. Der Brechungsindex verändert sich in Abhängigkeit von der Konzentration. Typischerweise wird ein Refraktometer verwendet, womit die Veränderung des Brechungswinkels bestimmt wird, der vom Brechungsindex abhängt.

Das Refraktometer nutzt hierbei die Abhängigkeit des Brechungsindex des Fluids von einer Anreicherung durch gelöste Reinigerkomponente im Fluid aus.

In einer bevorzugten Ausführungsform misst ein optischer Sensor die Reflexion eines Lichtstrahls. Der Lichtstrahl kann beispielsweise von einer LED-Lichtquelle stammen, welcher nach Auftreffen auf das zu messende Lösungsmittel reflektiert wird.

In dieser bevorzugten Ausgestaltung befindet sich die Sensoreinheit bevorzugt an der Wandung des Sammelbehälters oder der Wandung der Fluidleitung. Bevorzugt weist die Wandung an dieser Stelle ein "Fenster" auf, durch das Licht eingestrahlt und gemessen werden kann. Dieses Fenster besteht bevorzugt aus einem durchsichtigen Material, welches das Licht nicht absorbiert. Die Sensoreinheit steht dabei nicht in Kontakt mit dem Reinigungsfluid.

In einer weiteren Ausgestaltung der Erfindung weist die Sensoreinheit Mittel zur Messung der Schallgeschwindigkeit innerhalb des Reinigungsfluids auf.

Hierbei erfolgt die kontaktlose Konzentrationsmessung mittels einer Schallgeschwindigkeitsmessung bzw. einer Bestimmung der Veränderung der Schallgeschwindigkeit in Abhängigkeit von der Konzentration. Mit diesem Messverfahren wird die Konzentration in einer Flüssigkeit präzise und schnell bestimmt, denn die Schallgeschwindigkeit in einer Flüssigkeit hängt von der Konzentration der einzelnen Komponenten ab. Um die Schallgeschwindigkeit zu bestimmen, wird ein Schallimpuls ausgehend vom Schallsender durch das Reinigungsfluid gesendet und die Zeit gemessen, bis der Impuls den Schallempfänger erreicht. Da der Abstand zwischen dem Schallsender und - empfänger konstruktionsbedingt konstant ist, kann die Schallgeschwindigkeit berechnet werden. Hieraus kann wiederrum auf die Konzentration des Reinigungsfluids geschlossen werden.

Sowohl der Schallsender als auch der Schallempfänger stehen nicht in direktem Kontakt zum Reinigungsfluid. Bevorzugt befinden sich der Sender und der Empfänger an der äußeren Wandung des Sammelbehälters auf der jeweils gegenüberliegenden Seite auf gleicher Höhe, da auf diese Weise eine große Messstrecke vorhanden ist.

Bevorzugt weist die Wandung an der Stelle an der sich der Sender und der Empfänger befinden, eine Membran auf, durch die ein Schallimpuls ausgesendet und empfangen werden kann. Die Membran ist bevorzugt durch ein chemisch inertes Material gebildet. Bevorzugt kann das Material aus PTFE bestehen, was chemisch inert und ausreichend flexibel zur Übertragung der Schallimpulse vom Sender bzw. zum Empfänger ist. Sender und Empfänger stehen dabei selbst also nicht in Kontakt mit dem Reinigungsfluid.

Gemäß einer weiteren Ausführung der Erfindung weist die Vorrichtung einen zweiten Reinigerbehälter auf, in dem eine zweite Reinigerkomponente aufgenommen ist.

Erfindungsgemäß kann die zweite Reinigerkomponente in der Zusammensetzung identisch sein zur ersten Reinigerkomponente. Hierdurch ergibt sich der Vorteil, dass eine große Menge an Reinigungsfluid hergestellt werden kann. Ferner kann die zweite Reinigerkomponente als Reserve dienen, so dass stets gewährleistet werden kann, dass genügend Reinigungsfluid herstellbar ist. In dieser Ausführungsform ist die Vorrichtung bevorzugt derart ausgestaltet, dass der Fluidkreislauf zunächst durch den ersten Reinigerbehälter verläuft, solange bis die Sensoreinheit keine Konzentrationsveränderung mehr registriert. Sobald der erste Reinigerbehälter keine Reinigerkomponente mehr aufweist, da diese vollständig durch das Fluid gelöst wurde, kann die Steuereinheit den Fluidkreislauf so umschalten, dass die zweite Reinigerkomponente aus dem zweiten Reinigerbehälter gelöst wird. Dies kann beispielsweise mittels einer Ventilsteuerung erreicht werden. Mittels dieser Ausgestaltung kann sichergestellt werden, dass stets ein Reinigungsfluid im Sammelbehälter mit einer definierten Konzentration vorliegt.

In einer alternativen Ausgestaltung ist die zweite Reinigerkomponente in der Zusammensetzung unterschiedlich zur ersten Reinigerkomponente beschaffen. Dies hat den Vorteil, dass ein Reinigungsfluid hergestellt werden kann, welches aus unterschiedlichen Reinigerkomponenten besteht.

In einer weiteren bevorzugten Ausgestaltung kann die Vorrichtung mehr als zwei, drei, vier oder mehr Reinigerbehälter aufweisen.

In einer weiteren bevorzugten Ausgestaltung der Erfindung sind der Sammelbehälter und der Reinigerbehälter voneinander durch eine Rückhalteeinrichtung getrennt, wobei die Rückhalteeinrichtung bevorzugt feststoffretardierende Eigenschaften aufweist und wobei die Rückhalteeinrichtung bevorzugt als Membran, als Sieb, oder als Gewebe ausgestaltet ist.

Beim Lösen der Reinigerkomponente kann es zur Ablösung größerer Bruchstücke an Reinigerkomponenten kommen. Um zu vermeiden, dass größere Mengen an Reinigerkomponenten in das Fluid gelangen können, hält die Rückhalteeinrichtung diese größeren Mengen an Reinigerkomponente zurück. Hierdurch kann gewährleistet werden, dass sich die Konzentration nicht in unerwünschter Weise verändert.

Durch diese Ausgestaltung wird insbesondere verhindert, dass sich, sofern sich die Reinigerbehälter kopfüber auf dem Sammelbehälter befinden, aufgrund der Schwerkraft Reinigerkomponenten ablösen können und ins Reinigungsfluid fallen können.

Gemäß einer weiteren Ausgestaltung der Erfindung ist im Sammelbehälter eine Mischeinrichtung vorgesehen.

Diese Ausgestaltung ist besonders vorteilhaft, da sich bei längerem Lagern von Reinigungsfluid Feststoff absetzt bzw. abscheidet. Durch eine Mischeinrichtung, beispielsweise mit einem Propeller, einem Rohrflügel, einem Schaufelflügel, einem Mixerrohr, einer Rührstange oder dgl. wird das Reinigungsfluid durchmischt, so dass eine Absetzung von Reinigerkomponente bzw. Ausfällung von Reinigerkomponente verhindert werden kann. Ferner wird durch diese Vorrichtung stets ein homogenes Reinigungsfluid bereitgestellt.

Gemäß einer weiteren Ausgestaltung der Erfindung weist die Fluidleitung mindestens eine Düse zum Ansprühen einer Reinigerkomponente im Reinigerbehälter, vorzugsweise von unten, auf.

Die Vorrichtung ist gemäß einer weiteren Ausgestaltung der Erfindung derart ausgestaltet, dass sich die Düse an einer Mündung der Fluidleitung befindet. Die Düse kann dabei derart angeordnet sein, dass sie in Richtung des Reinigerbehälters zeigt und ein Ansprühen der Reinigerkomponente und damit das Anlösen der Reinigerkomponente gewährleistet werden kann. Die Düse kann bevorzugt derart ausgestaltet sein, dass der Sprühstrahl kegelförmig, punktuell oder auch fächerförmig strahlt.

Gemäß einer weiteren erfindungsgemäßen Ausgestaltung weist die Vorrichtung eine Volumensteuerungseinheit auf.

Diese Ausgestaltung bietet den Vorteil, dass gewährleistet werden kann, dass stets eine Mindestmenge an Reinigungsfluid im Sammelbehälter vorliegt. Die Volumensteuerungseinheit kann derart ausgestaltet sein, dass diese Fluid in den Sammelbehälter nachfüllt, sofern die Sensoreinheit eine Überschreitung der definierten Konzentration feststellt, oder sofern ein Mindestvolumen an Reinigungsfluid unterschritten ist. Ferner kann die Volumensteuerungseinheit derart ausgestaltet sein, dass, sofern Reinigungsfluid für die Reinigung von Geräten entnommen wurde, automatisch neues Fluid in den Sammelbehälter nachgefüllt wird. Ferner bietet diese Ausgestaltung den Vorteil, dass das Füllvolumen bestimmt werden kann. Dies kann eine genaue Berechnung der Konzentration verbessern.

Die Aufgabe wird erfindungsgemäß ferner durch ein Verfahren zur Bereitstellung zumindest eines Reinigungsfluids zur Versorgung eines Reinigungssystems mit den folgenden Schritten gelöst:
(a) Bereitstellung eines Fluids in einem Sammelbehälter;
(b) Zirkulieren des Fluids in einem Kreislauf durch den Sammelbehälter und den Reinigerbehälter;
(c) Lösen zumindest einer Reinigerkomponente durch das Fluid, wobei das Fluid mit gelöster Reinigerkomponente angereichert und schließlich das Reinigungsfluid erhalten wird;
(d) kontaktloses Messen der Konzentration des Reinigungsfluids durch eine Sensoreinheit; und
(e) Unterbrechen des Lösungsvorgangs in Schritt (c), sobald die Sensoreinheit eine vordefinierte Konzentration an gelöster Reinigerkomponente im Fluid registriert.

Die Aufgabe der Erfindung wird auch auf diese Weise vollkommen gelöst.

Durch das erfindungsgemäß vorgeschlagene Verfahren kann die Konzentration des Reinigungsfluids sicher bestimmt werden, ohne dass eine Messsonde in Kontakt mit dem aggressiven Reinigungsfluid kommt. Die Oberfläche der Sensoreinheit wird so nicht durch das aggressive Reinigungsfluid korrodiert und/oder beschädigt. Ferner kann durch das erfindungsgemäß vorgeschlagene Verfahren gewährleistet werden, dass stets ein Reinigungsfluid in einem Sammelbehälter vorliegt, welches eine vorbestimmte Konzentration aufweist. Ferner kann erfindungsgemäß gewährleistet werden, dass eine ausreichende Menge an Reinigungsfluid mit der definierten Konzentration vorliegt, so dass das Reinigungsfluid bedarfsgerecht erzeugt wird und/oder gelagert werden kann.

Gemäß einer weiteren erfindungsgemäßen Ausgestaltung des Verfahrens wird eine Messung einer Gewichtsveränderung, eine Messung einer Veränderung des hydrostatischen Drucks, eine Messung einer Kapazitätsveränderung, eine Messung einer Veränderung der Schallgeschwindigkeit, oder eine Messung einer Veränderung des Brechungsindex durchgeführt.

Auf diese Weise kann mittels dieser gemessenen Parameter die Konzentration des Reinigungsfluids bestimmt werden. Ferner kann hierdurch Schritt (e) gegebenenfalls gesteuert werden, so dass stets ein Reinigungsfluid im Sammelbehälter mit einer vordefinierten Konzentration vorliegt.

Gemäß einer weiteren Ausgestaltung der Erfindung wird eine Messung des Lösungsmittelvolumens im Sammelbehälter durchgeführt.

Diese Ausgestaltung weist den Vorteil auf, dass durch die Messung des Lösungsmittelvolumens stets festgestellt werden kann, ob ein Mindestvolumen an Reinigungsfluid oder Fluid im Sammelbehälter vorliegt. Hierdurch kann gewährleistet werden, dass stets Reinigungsfluid aus dem Sammelbehälter für die Reinigung von Geräten abgezogen werden kann.

Gemäß einer weiteren Ausgestaltung der Erfindung wird das Lösen zumindest einiger Reinigerkomponenten durch Aufsprühen des Fluids auf die Oberfläche der Reinigerkomponente durchgeführt, die sich im Reinigerbehälter befindet, bevorzugt durch Ansprühen von unten.

Gemäß einer weiteren Ausgestaltung der Erfindung wird die Menge an bereitgestelltem Reinigungsfluid reguliert, durch Regulieren der Bereitstellung des Fluids, um ein Mindestvolumen an Reinigungsfluid bereitzustellen.

Gemäß dieser Ausgestaltung wird, sobald ein Mindestvolumen an Reinigerfluid im Sammelbehälter unterschritten worden ist, frisches Fluid in den Sammelbehälter aufgefüllt. Im Anschluss erfolgt ein weiteres Lösen der Reinigerkomponente, bis das Reinigungsfluid in der gewünschten Sollkonzentration vorliegt.

Hierbei kann gewährleistet werden, dass stets ein Mindestvolumen an Reinigungsfluid bereit steht.

Gemäß einer weiteren Ausgestaltung der Erfindung wird das bereitgestellte Reinigungsfluid in einer Menge bereitgestellt, die ausreichend ist, um zumindest ein Gerät, welches zur Wärmebehandlung von Lebensmitteln ausgestaltet ist, insbesondere einen Backofen oder ein Kombidämpfer, zu reinigen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
Fig. 1 erste schematische Darstellung der erfindungsgemäßen Vorrichtung;
Fig. 2A eine schematische Darstellung einer kapazitiven Sensoreinheit;
Fig. 2B eine schematische Darstellung einer Sensoreinheit zur Messung der Schallgeschwindigkeit;
Fig. 2C eine schematische Darstellung einer refraktiven Sensoreinheit;
Fig. 2D eine schematische Darstellung einer Sensoreinheit zur Messung des hydrostatischen Drucks im Sammelbehälter; und
Fig. 3 schematische Darstellung der erfindungsgemäßen Vorrichtung, mit einer zweiten Reinigerkomponente.

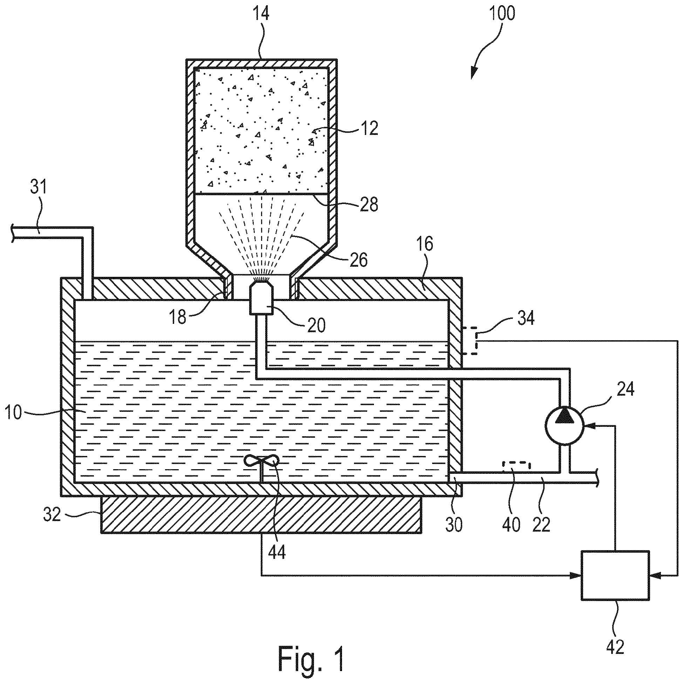

Fig. 1 zeigt eine erste erfindungsgemäße Vorrichtung 100 zur Bereitstellung zumindest eines Reinigungsfluids 10.

Die Vorrichtung 100 gemäß Fig. 1 umfasst eine Reinigerkomponente 12, die in einem ersten Reinigerbehälter 14 aufgenommen ist. Der erste Reinigerbehälter 14, mit darin aufgenommener Reinigerkomponente 12 ist oberhalb des Sammelbehälters 16 in einer Aufnahme 18 gehalten. Die Aufnahme 18 kann beispielsweise als Innengewinde ausgestaltet sein, welches sich an der Oberseite des Sammelbehälters 16 befindet. Der Reinigerbehälter 14 kann dann mit einem zugeordneten Außengewinde in das Innengewinde eingeschraubt werden. Es besteht natürlich auch die Möglichkeit, diese Verbindung in anderer Weise, etwa als rast- oder formschlüssige Schnappverbindung oder dergleichen auszubilden.

Der in den Sammelbehälter 16 eingeschraubte Reinigerbehälter 14 weist an seiner Unterseite eine Öffnung auf, durch die eine nach oben weisende Düse 20 in einen Hohlraum unterhalb der Reinigerkomponente 12 hervorsteht. Die Düse 20 ist dabei am Sammelbehälter 16 angeordnet. Die Düse 20 ist bevorzugt eine Sprühdüse. Die Düse 20 sprüht das Reinigungsfluid 10, welches im Sammelbehälter 16 bevorratet ist, in den Reinigerbehälter 14 auf die Unterseite 28 der Reinigerkomponente 12, welche hierdurch gelöst wird. Erfindungsgemäß handelt es sich bei einem Fluid um eine wässrige Lösung, welche zunächst keine gelöste Reinigerkomponente 12 enthält. Bevorzugt handelt es sich bei dem Fluid um Wasser. Durch Anreicherung von gelöster Reinigerkomponente 12 im Fluid wird das Fluid zum Reinigungsfluid 10.

Bei laufender Pumpe 24 wird über die Düse 20 kontinuierlich ein Sprühstrahl 26 auf die Unterseite 28 der Reinigerkomponente 12 gerichtet. Das auf die Unterseite 28 der Reinigerkomponente 12 aufgesprühte Fluid bzw. Reinigungsfluid 10 löst hierbei Reinigerkomponente 12 an und fließt zurück in den Sammelbehälter 16. Im Sammelbehälter 16 verändert sich hierdurch die Konzentration an gelöster Reinigerkomponente 12 im Reinigungsfluid 10. Das Reinigungsfluid 10 wird so lange in einem Fluidkreislauf über eine Fluidleitung 22, die Düse 20, den Reinigerbehälter 14 und den Sammelbehälter 16 gepumpt, bis sich in dem Reinigungsfluid 10 eine definierte Soll-Konzentration einstellt.

Das Lösen der Reinigerkomponente 12 und der damit verbundene Fluidkreislauf wird unterbrochen, sobald eine zugeordnete Sensoreinheit 32 in Form eines Drucksensors das Erreichen der vorgegebenen Sollkonzentration registriert. Die Unterbrechung des Fluidkreislaufs bzw. der Zufuhr von neuer Reinigungskomponente 12 wird durch die Steuereinheit 42 geregelt. Diese steuert die Pumpe 24. Da die Düse 20 im dargestellten Fall nur dann betätigt wird, wenn die Pumpe 24 aktiv ist, endet beim Abschalten der Pumpe 24 auch die Zufuhr von Reinigerkomponente 12.

Optional weist der Sammelbehälter 16 ferner eine Mischeinrichtung 44 auf. Diese Mischeinrichtung 44 kann als Propellor, Rohrflügel, Schaufelflügel, Mixerrohr, Rührstange oder Ähnliches ausgestaltet sein. Die Mischeinrichtung 44 durchmischt das Reinigungsfluid 10 im Sammelbehälter 16. Durch diese Ausgestaltung wird ein Absetzen von Reinigerkomponente 12 bzw. eine Ausfällung von Reinigerkomponente 12 verhindert. Somit wird auch verhindert, dass sich die Konzentration im Reinigungsfluid 10 bei längerem Lagern verändert. Daher kann stets ein homogenes Reinigungsfluid 10 bereitgestellt werden, welches eine definierte Soll-Konzentration aufweist.

Fig. 1 zeigt, dass die Pumpe 24 innerhalb der Fluidleitung 22 angeordnet ist, die an einem Ablauf 30 am unteren Ende des Sammelbehälters 16 beginnt und in einer Mündung in Form der Düse 20 endet. Über die Pumpe 24 wird das Reinigungsfluid 10, das in dem Sammelbehälter 16 bevorratet ist, der Düse 20 zugeführt, die als fächerförmiger, kegelförmiger, oder als punktueller Sprühstrahl 26 gegen die Unterseite der Reinigerkomponente 28 sprüht, so dass sich Reinigerkomponente 12 im Reinigungsfluid 10 löst.

Die erfindungsgemäße Vorrichtung 100 in Fig. 1 weist eine Sensoreinheit 32 in Form eines Drucksensors auf, etwa in Form eines Piezo-Sensors, auf dem der Sammelbehälter 16 aufliegt. Die Sensoreinheit 32 ist derart ausgestaltet, dass diese das Gewicht des Sammelbehälters 16 erfassen kann, das durch den hydrostatischen Druck im Sammelbehälter 16 beeinflusst wird. Der hydrostatische Druck verändert sich durch das Lösen der Reinigerkomponente 12, so dass mittels der gemessenen Druckänderung auf die Konzentration des Reinigungsfluids geschlossen werden kann. Das Volumen bleibt während des Lösungsvorgangs annähernd gleich, so dass durch die Veränderung des hydrostatischen Drucks die Dichte und damit die Konzentration des Reinigungsfluids 10 ermittelt werden kann.

Der Sammelbehälter 16 ist vertikal beweglich angeordnet, so dass eine Gewichtsveränderung des Sammelbehälters 16 von der Sensoreinheit 32 registriert werden kann.

Die Sensoreinheit 32 steht mit einer Steuereinheit 42 in Verbindung, welche die Pumpe 24 steuert. Sobald die Sensoreinheit 32 einen bestimmten Soll-Druck registriert, schaltet die Steuereinheit 42 die Pumpe ab. Damit endet die Zufuhr von Fluid zur Düse 20, so dass keine weitere Reinigerkomponente 12 gelöst wird.

Als alternative Sensoreinheiten sind in Fig. 1 beispielhaft eine Sensoreinheit 34 in Form eines kapazitiven Sensors an der Wandung des Sammelbehälters 16 zur Füllstandsmessung, sowie ferner eine refraktive Sensoreinheit 40 an der Fluidleitung 22, jeweils gestrichelt angedeutet.

Das Messprinzip der berührungslosen kapazitiven Messung beruht auf der Änderung der Kapazität in Abhängigkeit zur Veränderung der Konzentration an gelöster Reinigerkomponente 12 im Reinigungsfluid 10. Hierbei werden insbesondere die unterschiedlichen Permittivitäten des zu messenden Reinigungsfluids 10 ausgenutzt.

Die kapazitive Sensoreinheit 34 befindet sich bevorzugt an der Wandung des Sammelbehälters 16 oder an den beiden gegenüber liegenden Wandungen der Fluidleitung 22. Für diese Ausgestaltung ist die Wandung des Sammelbehälters 16 oder der Fluidleitung 22 bevorzugt nichtleitend ausgestaltet, da es ansonsten zu Messungenauigkeiten kommen kann. In einer bevorzugten Ausgestaltung kann die Wandung auch ein "Fenster" aufweisen, welches einen Bereich definiert, in dem die Wandung nichtleitend ausgestaltet ist. Ferner steht die Sensoreinheit 34 nicht in direktem Kontakt mit dem Reinigungsfluid 10.

Die kapazitive Sensoreinheit 34 weist mindestens zwei Elektroden auf, zwischen denen sich das Messfeld befindet, das durch die Konzentration von darin befindlichem Reinigungsfluid 10 beeinflusst wird. Die beiden Elektroden bilden die Platten eines Kondensators. Aufgrund der unterschiedlichen Permittivitäten und der damit verbundenen unterschiedlichen Kapazitäten kann die Konzentration ermittelt werden.

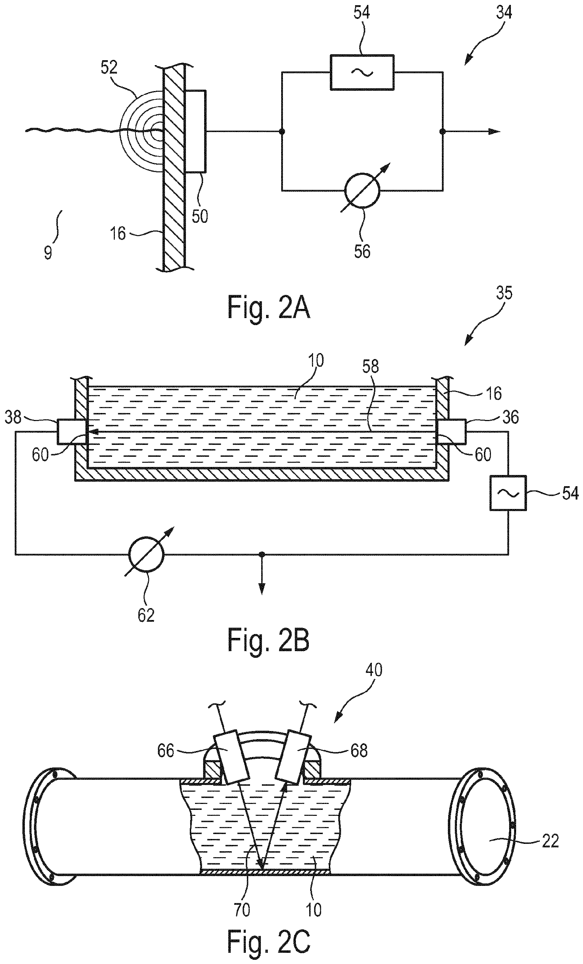

Bevorzugt wird für die kapazitive Sensoreinheit 34 ein Schwingkreis mit einem Oszillator verwendet, dessen Frequenz durch das Reinigungsfluid beeinflusst wird, wie nachfolgend anhand von Fig. 2A näher erläutert wird.

Wenn sich die Sensoreinheit 34 am oberen Drittel des Sammelbehälters 16 befindet, kann hiermit unmittelbar die Füllhöhe des Fluids im Sammelbehälter 16 bestimmt werden. Die Sensoreinheit 34 spricht sehr feinfühlig auf die Veränderung der Füllstandshöhe an, in Folge der unterschiedlichen Permittivitäten von Luft und von dem Fluid bzw. Reinigungsfluid 10.

Figur 2A zeigt die schematische Darstellung eines Ausschnitts der Sensoreinheit 34. Diese Sensoreinheit 34 weist eine Sensorelektrode 50 auf, welche an der Wandung des Sammelbehälters 16 angebracht ist. Hierfür ist die Wandung derart ausgestaltet, dass diese die kapazitive Messung nicht stört. Diese Sensorelektrode 50 erzeugt ein elektrisches Feld 52, die so genannte aktive Zone. Das elektrische Feld 52 wird bevorzugt mittels einer Oszillatorschaltung 54 erzeugt. Über das elektrische Feld 52 kann mittels der Sensorelektrode 50 die Kapazität zwischen der aktiven Elektrode 50 und des zu messenden Reinigungsfluid 10 gemessen und in der Messzelle 56 registriert und ausgewertet werden. Durch die Änderung der Konzentration in unmittelbarer Umgebung des elektrischen Feldes 52 des Sensors 50, verändert sich die Kapazität und beeinflusst so die Schwingungsfrequenz des Oszillators. Dies wird mittels einer Messeinrichtung 56 oder unmittelbar mittels der Steuerung 42 registriert, welche bevorzugt einen Mikroprozessor umfasst.

Ist die kapazitive Sensoreinheit 34 an der Fluidleitung 22 angebracht, so sind die beiden Elektroden an den beiden gegenüberliegenden Wandungen angeordnet. Hierdurch hat die durch die Veränderung der Konzentration des umlaufenden Reinigerfluids 10 veränderte Kapazität unmittelbaren Einfluss auf den über die Messzelle geschlossenen Schwingkreis und verändert somit dessen Frequenz.

Eine weitere mögliche Ausgestaltung der erfindungsgemäßen Sensoreinheit stellt die Konzentrationsmessung mittels der Schallgeschwindigkeit dar, dargestellt als Sensoreinheit 35 in Fig. 2B. Hierbei sendet ein Sender 36 ein Schallwellenimpuls durch den Sammelbehälter 16, welcher im Empfänger 38 gemessen wird. Durch die Messung der Laufdauer eines Schallimpulses zwischen Sender 36 und Empfänger 38 bzw. durch Messung der Phasenverschiebung zwischen dem Sendersignal und dem Empfängersignal kann die Schallgeschwindigkeit berechnet werden. Hieraus kann wiederrum auf die Konzentration des Reinigungsfluids geschlossen werden.

Mittels Eichlösungen kann eine Eich-Schallgeschwindigkeit ermittelt werden. Sobald diese Eich-Schallgeschwindigkeit in der Messzelle 62 registriert wird, kann die Steuereinheit 42 die Pumpe 24 abschalten bzw. die Zufuhr von Reinigerkomponente 12 in den Sammelbehälter 16 unterbrechen.

Die Schallwellen 58 können mittels einer Oszillatorschaltung 54 erzeugt werden. In einer bevorzugten Ausgestaltung kann der Sender 36 als Lautsprecher ausgestaltet sein, beispielsweise als ein piezoelektrischer Quarz- oder Keramikschwinger. An diesen kann eine Wechselspannung mit deren Eigenresonanzfrequenz oder einer Oberschwingung davon angelegt werden.

Sowohl Sender 36 als auch der Empfänger 38 stehen nicht in direktem Kontakt zum Reinigungsfluid 10, sondern sind beispielsweise über eine Membran 60 vom Reinigungsfluid 10 getrennt. Diese Membran 60 ist derart ausgestaltet, dass die Schallwellen 58 gesendet und empfangen werden können. Die Membran 60 ist bevorzugt aus einem chemisch inerten Material wie etwa PTFE beschaffen, so dass diese nicht durch das aggressive Reinigungsfluid 10 angegriffen werden kann.

Bei den gesendeten Schallwellen 58 kann es sich um Ultraschallwellen handeln, die mittels Piezo-Sensoren übertragen werden. Mit diesem Messverfahren kann die Konzentration des Reinigungsfluid 10 sehr präzise bestimmt werden, denn die Schallgeschwindigkeit in einer Flüssigkeit hängt von der Konzentration der einzelnen Komponenten ab.

Bevorzugt befinden sich der Sender 36 und der Empfänger 38 an der äußeren Wandung des Sammelbehälters 16 auf der jeweils gegenüberliegenden Seite auf gleicher Höhe, da auf diese Weise eine große Messstrecke vorhanden ist.

Eine weitere mögliche Ausgestaltung der erfindungsgemäßen Sensoreinheit stellt eine refraktive Sensoreinheit 40 gemäß Fig. 1 bzw. 2C dar. Hierbei kann die Konzentration an gelöster Reinigerkomponente 12 im Fluid mittels einer Messung des Brechungsindex im Reinigungsfluid 10 ermittelt werden. Der Brechungsindex verändert sich in Abhängigkeit von der Konzentration. Hierfür sendet eine Lichtquelle 66 einen Lichtimpuls aus, welcher an der transparenten Wandung der Fluidleitung 22 total reflektiert wird. Der reflektierte Lichtstrahl wird mittels des Empfängers 68 detektiert.

Da der Winkel der Totalreflektion vom Brechungsindex des Reinigungsfluids abhängt, kann daraus auf die Konzentration des Reinigungsfluids geschlossen werden.

Figur 2C zeigt die schematische Darstellung eines Ausschnitts der Sensoreinheit 40 in Form des Refraktometers.

Der Empfänger 68 ist bevorzugt als optischer Sensor ausgestaltet. Sowohl Sender 66 als auch Empfänger 68 befinden sich hierbei außerhalb der Wandung. Bei der Wandung handelt es sich bevorzugt um die Wandung der Fluidleitung 22. Die Wandung ist derart ausgestaltet, dass diese den Lichtstrahl 70 nicht unerwünscht bricht oder die Lichtstrahlen 70 absorbiert. Bevorzugt weist die Wandung an der Stelle des Sender 66 und des Empfängers 68 ein durchsichtiges Fenster auf.

Mittels Eichlösungen kann das Refraktometer auf eine gewünschte Sollkonzentration geeicht werden.

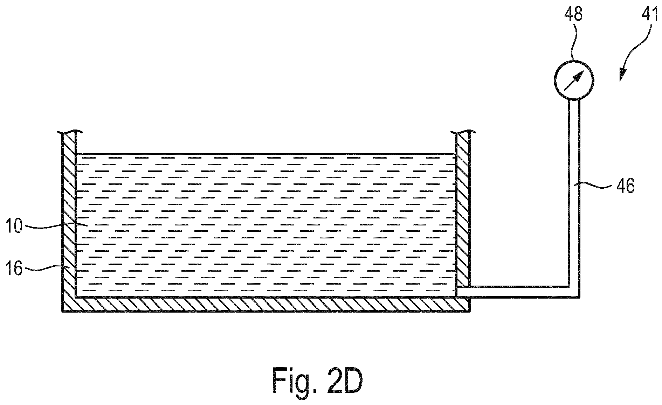

Eine weitere Ausgestaltung einer Sensoreinheit ist in Fig. 2D dargestellt und insgesamt mit 41 bezeichnet. Es handelt sich hierbei um ein besonders einfaches und zuverlässiges Messverfahren durch Messung des hydrostatischen Drucks am Boden des Sammelbehälters 16.

Hierzu ist am Boden des Sammelbehälters 16 eine mit Luft gefüllte Messleitung 46 angeordnet, die bis über das maximal mögliche Niveau des Flüssigkeitsspiegels im Sammelbehälter 16 hinaus nach oben geführt ist. Am Ende der Messleitung ist ein Drucksensor 48 vorgesehen. Registriert der Drucksensor 48 das Erreichen eines bestimmten Schwellwertes, so hat die Konzentration des Reinigungsfluids die vorgegebene Soll-Konzentration erreicht.

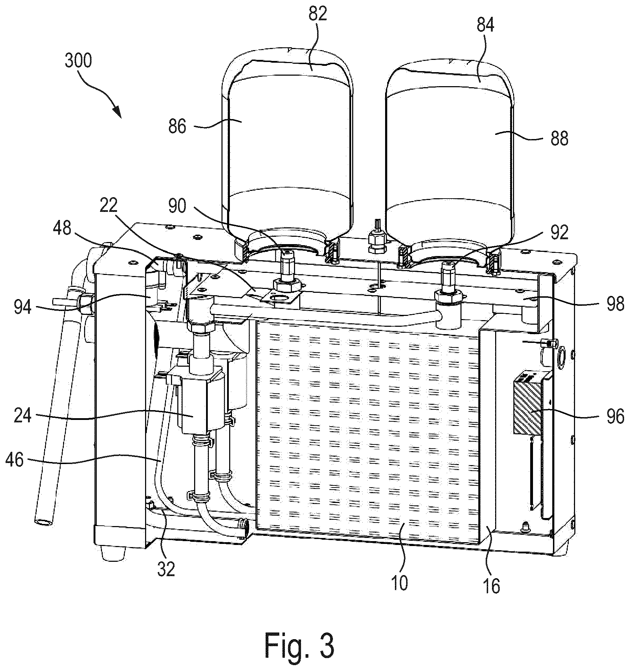

Fig. 3 zeigt eine dritte erfindungsgemäße Vorrichtung 300, zur Bereitstellung zumindest eines Reinigungsfluids 10.

Die Vorrichtung 300 gemäß der Darstellung in Fig. 3 weist einen ersten Reinigerbehälter 82 und einen zweiten Reinigerbehälter 84 auf. Diese sind mit ihrer offenen Seite nach unten in der Decke des Sammelbehälters 16 befestigt. Der erste und zweite Reinigerbehälter 82 und 84 enthalten eine erste und eine zweite Reinigerkomponente 86 und 88, beispielsweise in Blockform. Die jeweiligen Unterseiten der ersten und zweiten Reinigerkomponenten 86 und 88 werden durch Sprühstrahlen, die aus einer ersten Düse 90 und einer zweiten Düse 92 austreten, benetzt, so dass Reinigerkomponente 86 und 88 angelöst und in dem Reinigungsfluid 10 aufgelöst werden kann. Das Fluid tritt über einen Zulauf zur ersten und zweiten Pumpe 24 über. Die Pumpen 24 der ersten Düse 90 bzw. der zweiten Düse 92 fördern jeweils Reinigungsfluid 10 über eine zugeordnete Fluidleitung 22 in die zugeordneten Düsen 90, 92, so dass die Unterseiten der ersten und der zweiten Reinigerkomponente 86 und 88 benetzt werden. Dabei kann die Fluidleitung 22 zwischengeschaltete Ventile 94, bevorzugt Magnetventile, aufweisen. Der Volumenfüllstand des Reinigungsfluids 10, das sich in dem Sammelbehälter 16 befindet, kann mittels einer Volumensteuerung 96 gesteuert werden.

In den beiden Reinigerbehältern 82 und 84 gemäß der Darstellung in Fig. 3 können zwei, von der Zusammensetzung her gleiche, Reinigerkomponenten 86 und 88 bevorratet sein. Hierbei kann die zweite Reinigerkomponente 88 als Reserve dienen, so dass stets gewährleistet werden kann, dass genügend Reinigungsfluid 10 herstellbar ist. In dieser Ausführungsform ist die Vorrichtung 300 bevorzugt derart ausgestaltet, dass der Fluidkreislauf zunächst durch den ersten Reinigerbehälter 82 verläuft, solange bis eine Sensoreinheit 32 keine Konzentrationsveränderung mehr registriert. Sobald der erste Reinigerbehälter 82 keine Reinigerkomponente 86 mehr aufweist, da diese vollständig durch das Reinigungsfluid 10 gelöst wurde, kann die Steuereinheit den Fluidkreislauf so umschalten, dass die zweite Reinigerkomponente 88 aus dem zweiten Reinigerbehälter 84 gelöst wird. Hierdurch kann sichergestellt werden, dass stets ein Reinigungsfluid 10 im Sammelbehälter 16 mit einer definierten Konzentration vorliegt. Die Ansteuerung der beiden Düsen 90 und 92 kann durch Ventile 94 gesteuert werden. Bei den Ventilen 94 handelt es sich bevorzugt um Magentventile.

Fig. 3 zeigt ferner eine Rückhalteeinrichtung 98, welche die Reinigerkomponenten 86 und 88 von dem Sammelbehälter 16 und dem darin befindlichen Reinigungsfluid 10 trennt. Eine derartige Rückhalteeinrichtung 98 weist bevorzugt feststoffretardierende Eigenschaften auf. Derartige Rückhalteeinrichtungen 98 können etwa als Membran, als Sieb, oder als Gewebe ausgestaltet sein.

Beim Lösen der Reinigerkomponente 86 und 88 kann es zur Ablösung größerer Bruchstücke an Reinigerkomponenten 86 und 88 kommen. Um zu vermeiden, dass größere Mengen an Reinigerkomponenten 86 und 88 in das Reinigungsfluid 10 gelangen können, hält die Rückhalteeinrichtung 98 diese größeren Mengen an Reinigerkomponente 86 und 88 zurück. Hierdurch kann gewährleistet werden, dass sich die Konzentration nicht in unerwünschter Weise verändern kann.

Sobald das Reinigungsfluid 10 eine definierte Soll-Konzentration aufweist, wird die Pumpe 24 gestoppt und damit die Zufuhr von Reinigerkomponente 86 bzw. 88 unterbrochen.

Die Zirkulation des Reinigungsfluids 10, insbesondere das Lösen der Reinigerkomponente 86 bzw. 88, wird über die Steuereinheit 42 (in Fig. 3 nicht dargestellt) gemäß der Informationen der Sensoreinheit 32 gesteuert. Sofern die Sensoreinheit 32 feststellt, dass im Sammelbehälter 16 die Soll-Konzentration vorliegt, gibt diese die Information an die Steuerungseinheit 42 weiter, so dass die Steuereinheit die Zirkulation des Reinigungsfluids 10 beendet. Ist die definierte Konzentration noch nicht erreicht, läuft die Zirkulation des Reinigungsfluids 10 weiter.

Gemäß Fig. 3 wird mittels einer Messleitung 46 und eines Drucksensors 48 der hydrostatische Druck gemessen, wie zuvor anhand von Fig. 2D erläutert wurde.

## Patentansprüche

1. Vorrichtung (100, 300) zur Bereitstellung zumindest eines Reinigungsfluids (10), mit einem Sammelbehälter (16), der über eine Pumpe (24) und eine Fluidleitung (22) mit einem ersten Reinigerbehälter (14, 82) verbunden ist, in dem eine erste Reinigerkomponente (12, 86) aufgenommen ist, mit einer Sensoreinheit (32, 34, 36, 38, 40, 41), und mit einer Steuereinheit (42) zur Steuerung der Pumpe (24) und/oder der Zufuhr von Reinigerkomponente (12, 86) in den Sammelbehälter (16) in Abhängigkeit einer von der Sensoreinheit (32, 34, 35, 40, 41) gemessenen Konzentration des Reinigungsfluids (10), **dadurch gekennzeichnet, dass** die Sensoreinheit (32, 34, 35, 40, 41) zur kontaktlosen Konzentrationsmessung ausgebildet ist.

2. Vorrichtung gemäß Anspruch 1, **dadurch gekennzeichnet, dass** die Sensoreinheit (32) Mittel für eine gravimetrische Messung aufweist.

3. Vorrichtung gemäß Anspruch 1, **dadurch gekennzeichnet, dass** die Sensoreinheit (41) Mittel zur Messung des hydrostatischen Drucks des Reinigungsfluids (10) aufweist.

4. Vorrichtung gemäß Anspruch 1, 2 oder 3, **dadurch gekennzeichnet, dass** die Sensoreinheit (34) Mittel zur Messung der Kapazität aufweist.

5. Vorrichtung gemäß einem der voranstehenden Ansprüche, **dadurch gekennzeichnet, dass** die Sensoreinheit (40) Mittel zur Messung des Brechungsindex aufweist.

6. Vorrichtung gemäß einem der voranstehenden Ansprüche, **dadurch gekennzeichnet, dass** die Sensoreinheit (35) Mittel zur Messung der Schallgeschwindigkeit innerhalb des Reinigungsfluids aufweist.

7. Vorrichtung gemäß einem der voranstehenden Ansprüche, **gekennzeichnet durch** einen zweiten Reinigerbehälter (84), in dem eine zweite Reinigerkomponente (88) aufgenommen ist.

8. Vorrichtung gemäß einem der voranstehenden Ansprüche, **dadurch gekennzeichnet, dass** der Sammelbehälter (16) und der Reinigerbehälter (14, 82, 84) voneinander durch eine Rückhalteeinrichtung (98) getrennt sind, wobei die Rückhalteeinrichtung (98) bevorzugt feststoffretardierende Eigenschaften aufweist, und wobei die Rückhalteeinrichtung (98) bevorzugt als Membran, als Sieb oder als Gewebe ausgestaltet ist.

9. Vorrichtung gemäß einem der voranstehenden Ansprüche, **dadurch gekennzeichnet, dass** im Sammelbehälter (16) eine Mischeinrichtung (44) vorgesehen ist.

10. Vorrichtung gemäß einem der voranstehenden Ansprüche, durch gekennzeichnet, dass die Fluidleitung mindestens eine Düse (20, 90, 92) zum Ansprühen einer Reinigerkomponente (12, 86, 88) im Reinigerbehälter (14, 82, 84), vorzugsweise von unten, aufweist.

11. Vorrichtung gemäß einem der voranstehenden Ansprüche, durch gekennzeichnet, dass die Vorrichtung eine Volumensteuerungseinheit (96) aufweist.

12. Verfahren zur Bereitstellung zumindest eines Reinigungsfluids (10) zur Versorgung eines Reinigungssystems mit den folgenden Schritten:
(a) Bereitstellung eines Fluids in einem Sammelbehälter (16);
(b) Zirkulieren des Fluids in einem Kreislauf durch den Sammelbehälter (16) und den Reinigerbehälter (14, 82, 84);
(c) Lösen zumindest einer Reinigerkomponente (12, 86, 88) durch das Fluid, wobei das Fluid mit gelöster Reinigerkomponente (12, 86, 88) angereichert und schließlich das Reinigungsfluid (10) erhalten wird;
(d) kontaktloses Messen der Konzentration des Reinigungsfluids (10) durch eine Sensoreinheit (32, 34, 35, 40, 41); und
(e) Unterbrechen des Lösungsvorgangs in Schritt (c), sobald die Sensoreinheit (32, 34, 35, 40, 41) eine vordefinierte Konzentration an gelöster Reinigerkomponente (12, 86, 88) im Reinigungsfluid (10) registriert.

13. Verfahren gemäß Anspruch 12, bei dem eine Messung einer Gewichtsveränderung, eine Messung einer Veränderung des hydrostatischen Drucks, eine Messung einer Kapazitätsveränderung, eine Messung einer Veränderung der Schallgeschwindigkeit oder eine Messung einer Veränderung des Brechungsindex durchgeführt wird.

14. Verfahren gemäß Anspruch 12 oder 13, bei dem eine Messung des Lösungsmittelvolumens im Sammelbehälter (16) durchgeführt wird.

15. Verfahren gemäß einem der Ansprüche 12 bis 14, bei dem das Lösen zumindest einer Reinigerkomponente (12, 86, 88) durch Aufsprühen des Fluids auf die Oberfläche der Reinigerkomponente (28) durchgeführt wird, die sich im Reinigerbehälter (14, 82, 84) befindet, bevorzugt durch Ansprühen von unten.
